# EUROPEAN PATENT SPECIFICATION

(11) **EP 3 226 494 B1**
(45) Date of publication and mention of the grant of the patent: **23.12.2020**
(21) Application number: 16162814.4
(22) Date of filing: 30.03.2016
(51) Int. Cl.: H04L 12/801, H04L 12/931, H04L 12/803, H04L 12/833, H04L 12/947, H04L 12/935, H04L 12/721

(54) **SWITCH AND METHOD FOR RECEIVING AND FORWARDING ETHERNET PACKETS**
NETZWERKKNOTENUND VERFAHREN ZUM EMPFANGEN UND WEITERLEITEN VON ETHERNET-PAKETEN
COMMUTATEUR ET PROCÉDÉ DE RÉCEPTION ET DE TRANSFERT DE PAQUETS ETHERNET

(43) Date of publication of application: 04.10.2017
(73) Proprietor: Intel Corporation, Santa Clara, CA 95054 (US)
(72) Inventor: RENNER, Martin, 40822 Mettmann (DE); STADLER, Thomas, 81825 Munich (DE)
(74) Representative: Sticht, Andreas

(56) References cited:
- EP-A1- 2 924 934
- US-B1- 6 567 377
- US-B1- 8 018 943
- US-B2- 8 942 139
- SINH CHUNG NGUYEN ET AL: "Evaluation of multipath TCP load sharing with coupled congestion control option in heterogeneous networks", GLOBAL INFORMATION INFRASTRUCTURE SYMPOSIUM (GIIS), 2011, IEEE, 4 August 2011 (2011-08-04), pages 1-5, XP031940925, DOI: 10.1109/GIIS.2011.6026698 ISBN: 978-1-4577-1262-3

## Description

### TECHNICAL FIELD

Present application relates to receiving and forwarding Ethernet packets. Especially, the present application relates to a method and a switch arranged to receive Ethernet packets, wherein the Ethernet packets comprise transmission control protocol, TCP, packets and/or non-TCP packets, and to forward the Ethernet packets to at least two ports. Additionally, the present application relates to corresponding computer program products and to corresponding computer-readable recording media.

### BACKGROUND

Ethernet is the most widely installed local area network (LAN) technology. Since the introduction of Ethernet, it has been refined to support higher and increasing data rates, i.e. speed at which data is transferred per time unit, usually measured in bytes per second. Thus, Ethernet comprises devices arranged to transmit and/or receive data packets, i.e. Ethernet packets according to different data rates. The known techniques for connecting Ethernet devices allow connecting devices with the same data rates or use an Ethernet switch as a connector of the corresponding devices. The Ethernet switch, as used in the known techniques, comprises one high data rate interface port and several low data rate interface ports and operates as a converter between high data rate and low data rate transmissions. The terms "high data rate" and "low data rate" mean that the high data rate is higher than the low data rate. The difference between the two data rates, the "high data rate" and the "low data rate", is higher than a predefined threshold. However, Ethernet switches as used in the known techniques are limited to the data rate of the low interface port.

Thus, a need for connecting Ethernet devices communicating with different data rates in a flexible and efficient way still exists. Particularly, a more flexible and efficient connecting of an Ethernet device with a high data rate interface port to a further Ethernet device with two or more low data rate ports is needed. Further, at the same time it is desired to achieve a data rate of two or more cumulated low data rate ports for data packet or packet transmission respectively in Ethernet.

### SUMMARY

According to the present application, a flexible Ethernet packet communication (i.e. transmission and/or reception) in Ethernet is enabled with devices each of them having ports arranged to transmit Ethernet packets with different data rates, as outlined above. Particularly, according to the present application, an Ethernet packet communication is enabled that satisfies the above-described desires.

In the present application, one approach is to provide a mechanism, by use of which a flexible forwarding of data packets to at least two ports is enabled. During the forwarding, the data packets are distributed to the at least two ports according to the mechanism, that is specified in claims and described in more detail below.

Some objects and advantages are achieved by subject matters of independent claims, wherein further exemplary and supplementing embodiments are specified in dependent claims as well as in the present description and attached figures.

In particular, the present application refers to a switch arranged to receive Ethernet packets, wherein the Ethernet packets comprise transmission control protocol, TCP, packets and/or non-TCP packets, and to forward the Ethernet packets to at least two ports, wherein the switch is configured to: forward each of the TCP packets to any one of the at least two ports; and forward each stream of non-TCP packets to one corresponding port of the at least two ports.

The term "Ethernet packet" refers to a packet that is communicated (i.e. transmitted and/or received) in Ethernet. Because the switch is arranged to receive and forward Ethernet packets in Ethernet, it may be referred to also as "Ethernet switch".

TCP packets are data packets that are communicated (i.e. transmitted and/or received) and arranged according to Transmission Control Protocol (TCP). Non-TCP packets are all other data packets that are not communicated and arranged according to TCP. According to the present application, the forwarding or distribution of the Ethernet packets to the at least two ports is done by considering whether the receiving side, to which the Ethernet packets are forwarded, will be able to reconstruct the original sequence of the Ethernet packets as transmitted correctly, because during the transmission the order of packets may change, i.e. a packet transmitted before a further packet arrives, i.e. is received after the further packet. According to the TCP, TCP packets are enumerated, wherein each TCP packet comprises the corresponding number. Therefore, the receiving side is able to reconstruct the correct sequence of the TCP packets by use of their enumeration. Thus, if data streams of TCP packets, i.e. TCP packet streams are transmitted, the receiving side will be able to recognize the corresponding sequence of TCP packets in a corresponding TCP stream correctly by use of the enumeration of the TCP packets. The term "data stream" or "stream" refers to a sequence of communicated (i.e. transmitted and/or received) data packets. Present application considers this and does not waste precious time for further processing of TCP packets in the switch, e.g. for analyzing whether or not a particular TCP packet belongs to a particular stream. The TCP packets are forwarded to any one of the at least two ports. The situation is different in case of non-TCP packets. In this case, no guarantee is given that the sequence of a non-TCP packet stream will be recognized by the receiving side correctly. Therefore, each stream of non-TCP packets is forwarded to one corresponding port or to one particular port respectively.

According to the present application, Ethernet packets are distributed to two or more ports and the cumulated data rate of said two or more ports is used.

Thus, according to the invention, the switch is configured to: forward two TCP packets of the same stream of TCP packets to two different ports of the at least two ports; and/or forward non-TCP packets of the same stream of non-TCP packets to the same port of the at least two ports.

The switch is further configured to: forward TCP packets by alternately distributing the TCP packets among the at least two ports; and/or forward streams of non-TCP packets by alternately distributing the streams of non-TCP packets among the at least two ports.

The switch is further configured to receive the Ethernet packets with a first data rate and to forward the Ethernet packets with a second data rate, wherein the first data rate is higher than the second data rate. Thus, the switch is configured to receive the Ethernet packets from a port that operates with a higher data rate than each of the at least two ports, to which the Ethernet packets are transmitted. In other words, according to an embodiment, the port, from which Ethernet packets are received, is a high data rate port and each port or one or more of the at least two ports is a low data rate port. As described above, the terms "high data rate" and "low data rate" mean that the high data rate is higher than the low data rate. The difference between the two data rates, the "high data rate" and the "low data rate", is, e.g., higher than a predefined threshold.

According to an embodiment, the switch is a virtual local area network, VLAN, aware switch.

According to an embodiment, the switch is configured to receive the Ethernet packets from at least one of the following ports: a gigabit media independent interface (GMII) port; a serial gigabit media independent interface (SGMII) port; a 1000BASE-X port; a 2500BASE-X port; a 2.5GBASE-T port; a 5GBASE-T port; a 10GBASE-T port. It is noted that the ports, from which Ethernet packets are received according to the present application, are not limited to the exemplary listed ports and that it is possible to receive Ethernet packets also from other ports. According to an embodiment, the other ports refer in general to ports that operate at higher data rates than the at least two data ports, to which Ethernet packets are forwarded or transmitted, individually. Thus, the other ports are according to an embodiment high data rate ports.

According to an embodiment, the switch is configured to receive the Ethernet packets from and/or to forward the Ethernet packets to at least one of the following ports: a reduced gigabit media-independent interface (RGMII) port; a gigabit Ethernet physical layer (GPHY) port; 1000BASE-T port. It is noted that the ports are not limited to the exemplary listed ports. In particular, forwarding or transmitting of Ethernet packets to other ports is also possible. According to an embodiment, the other ports refer in general to ports that operate at a lower data rates, e.g., low data rate ports.

According to an embodiment, the switch is configured to receive and/or to forward the Ethernet packets via at least one optical interface and/or via at least one electrical interface; and/or the switch is incorporated in a fixed or pluggable optical module housing.

According to an embodiment, each of the Ethernet packets comprises a corresponding mark.

According to a further embodiment, the mark of each Ethernet packet: allows determining a port of the at least two ports, to which the corresponding Ethernet packet will be forwarded; marks one port of the at least two ports, to which the corresponding Ethernet packet will be forwarded; and/or identifies VLAN of the corresponding Ethernet packet.

According to an embodiment, the switch is configured to decide, for each Ethernet packet, on a port of the at least two ports, to which the corresponding Ethernet packet will be forwarded, based on the mark of the corresponding Ethernet packet.

According to an embodiment, the switch is configured to: extract a corresponding mark from each of the TCP packets and forward each of the TCP packets to one of the at least two ports according to the corresponding mark; and/or extract corresponding marks from each non-TCP packet of a corresponding stream of the non-TCP packets and forward each non-TCP packet of the corresponding stream of the non-TCP packets to one of the at least two ports according to the corresponding marks.

According to an embodiment, the switch is configured to remove the mark of each Ethernet packet before the forwarding of the corresponding Ethernet packet.

Thus, according to some embodiments of the present application Ethernet packets are marked in a way that the forwarding of the Ethernet packets is divided on two or more ports and that cumulated date rate of the two or more ports is used.

The present application refers further to a method executed by the switch, introduced above and described in more detail below.

The present application corresponds also to a computer program product comprising computer readable program code that is configured to cause a computing device to execute the above-mentioned method. According to an embodiment, the computer readable program code is embodied in a computer-readable medium. According to a further embodiment, the computer-readable medium is a non-transitory computer-readable medium. According to an embodiment, the computing device is a processor or any other computer configured to execute computer readable program code.

Furthermore, the present application refers also to a computer-readable recording medium configured to store therein the above-introduced computer program product. According to an embodiment, the computer-readable medium is a non-transitory computer-readable medium.

Moreover, the present application refers to a port trunking device arranged to trunk Ethernet traffic, wherein the port trunking device comprises a switch that corresponds to the switch as introduced above and as described in more detail below.

According to an embodiment, the port trunking device is incorporated in a fixed or pluggable optical module housing; and/or the port trunking device is configured to receive and/or to forward the Ethernet packets via at least one optical interface and/or via at least one electrical interface.

According to an embodiment of the present application, the port trunking device is arranged as a typical device representing one component and comprising several compounds like the aforementioned switch.

It has to be noted that the disclosed embodiments can be combined with each other and are not intended for an individual consideration and implementation.

### BRIEF DESCRIPTION OF THE DRAWINGS

In the following, embodiments are described with reference to accompanying drawings in which the same or similar reference numerals designate the same or similar elements.
FIG. 1 is a block diagram with devices involved for transmitting or forwarding Ethernet packets according to an embodiment.
FIG. 2a is a block diagram of a port trunking device according to an embodiment.
FIG. 2b is a block diagram of a port trunking device according to an embodiment.
FIG. 3 is a flow diagram with operations executed by an Ethernet packet providing device.
FIG. 4 is a flow diagram with operations executed by a switch according to an embodiment.

### DETAILED DESCRIPTION OF EMBODIMENTS

In the following, embodiments are described with reference to the attached drawings. Features of the various embodiments may be combined with each other unless specifically stated otherwise.

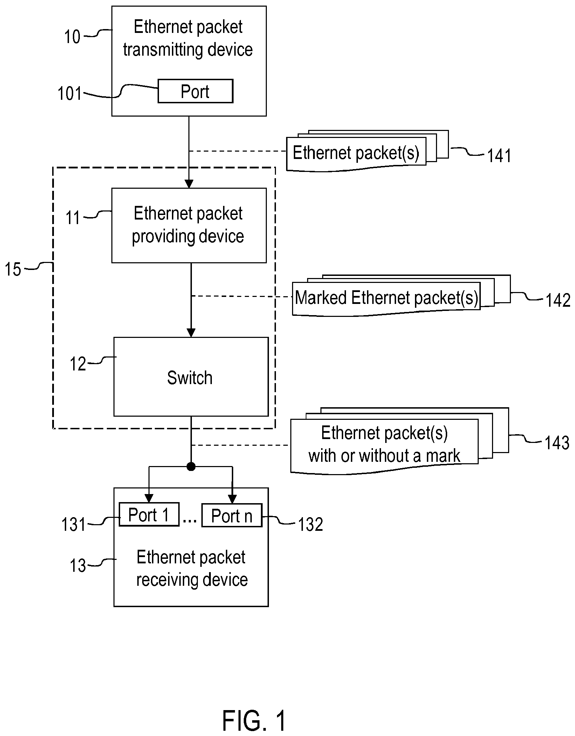

FIG. 1 is a block diagram with devices involved for transmitting or forwarding Ethernet packets according to an embodiment. According to the present embodiment, Ethernet packet transmitting device 10 that is a device of Ethernet transmits data packets or Ethernet packets 141 respectively to Ethernet packet receiving device 13 that is a further device of Ethernet. Ethernet packet transmitting device 10 comprises at least one port 101, via which Ethernet packets 141 are transmitted by Ethernet packet transmitting device 10. Ethernet packet receiving device 13 comprises at least two ports 131, 132, via which Ethernet packets 143 are received by Ethernet packet receiving device 13. According to a supplementary embodiment, Ethernet packet receiving device 13 comprises n ports 131, 132, wherein n is equal 2 or greater than 2 and is a natural. According to the present embodiment, port 101 communicates (i.e. transmits and/or receives) Ethernet packets 141 at a data rate that is higher than data rates used by ports 131, 132 for the communication of the Ethernet packets 143. According to an embodiment port 101 is a high data rate port. According to a supplementary embodiment, port 101 is one of the following: a gigabit media independent interface (GMII) port, a serial gigabit media independent interface (SGMII) port, a 1000BASE-X port, a 2500BASE-X port, a 2.5GBASE-T port, a 5GBASE-T port, a 10GBASE-T port. According to an embodiment, ports 131, 132 are low data rate ports. According to a supplementary embodiment, each of the ports 131, 132 is one of the following: a reduced gigabit media-independent interface (RGMII) port, a gigabit Ethernet physical layer (GPHY) port, a 1000BASE-T port. Thus, Ethernet packets 141 transmitted by port 101 are transmitted with a data rate that is higher than data rates, by use of which Ethernet packets 143 are received at ports 131, 132.

According to the present embodiment, Ethernet packets 141 transmitted by Ethernet packet transmitting device 10 via port 101 are received by Ethernet packet providing device 11 that is configured to provide Ethernet packets 142 to switch 12. Before providing Ethernet packets 142 to switch 142, Ethernet packet providing device 11 adds to each of the received Ethernet packets 141 a corresponding mark. Each mark enables determining a corresponding port 131, 132 to which the Ethernet packet 143 will be forwarded. Thus, each mark marks one port 131, 132 of ports 131, 132 as a destination port of the corresponding Ethernet packet 143.

After marking each received Ethernet packet 141, Ethernet packet providing device 11 provides the correspondingly marked Ethernet packet 142 to switch 12. According to a supplementary embodiment, Ethernet packet providing device 11 is a circuit.

According to present embodiment, switch 12 receives marked Ethernet packets 142 and decides on ports 131, 132, to which Ethernet packets 143 will be forwarded. According to a supplementary embodiment, after deciding on ports 131, 132 and before forwarding Ethernet packets 143, switch 12 removes from each Ethernet packet 142 the corresponding mark added by Ethernet packet providing device 11 and forwards the Ethernet packet 143 without the mark to the Ethernet packet receiving device 13, i.e. to one of ports 131, 132. In this case, Ethernet packets 141 transmitted by Ethernet packet transmitting device 10 and received by Ethernet packet providing device 11 are equal or essentially equal Ethernet packets 143 received by Ethernet packet receiving device 13. According to a further supplementary embodiment, switch 12 does not remove marks from Ethernet packets 142. In this case, Ethernet packets 142 provided by Ethernet packet providing device 11 to switch 12 are equal or essentially equal Ethernet packets 143 received by Ethernet packet receiving device 13.

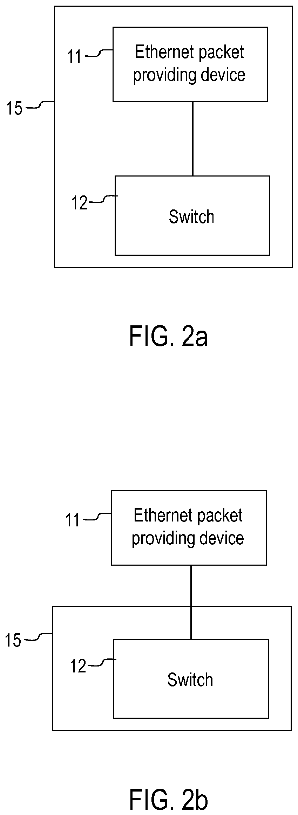

According to a further supplementary embodiments, Ethernet packet providing device 11 and/or switch 12 are parts of port trunking device 15. This is indicated in FIG. 1 by box 15. Figures 2a and 2b show corresponding embodiments of port trunking device 15. According to embodiment of FIG 2a, port trunking device 15 comprises both Ethernet packet providing device 11 and switch 12. According to embodiment of FIG. 2b, port trunking device 15 comprises switch 12 only.

According to a supplementary embodiment, port trunking device 15 is incorporated in or comprises a fixed or pluggable optical module housing. According to a supplementary embodiment, port trunking device 15 comprises at least one optical interface and/or at least one electrical interface. According to an embodiment, port trunking device 15 is configured to receive and/or forward Ethernet packets 141, 143 via at least one optical interface and/or via at least one electrical interface.

According to another supplementary embodiment, port trunking device 15 is arranged as a system, i.e. port trunking device 15 does not represent a component comprising a housing and further elements of it like switch 12 and/or Ethernet providing device 11 but represents an arrangement of interconnected components like switch 12 and/or Ethernet providing device 11.

According to an embodiment, switch 12 comprises at least one optical interface and/or at least one electrical interface. According to an embodiment, switch 12 receives and/or forwards Ethernet packets 142, 143 via at least one optical interface and/or via at least one electrical interface. According to a further supplementary embodiment, switch 12 is incorporated in or comprises a fixed or pluggable optical module housing.

According to further supplementary embodiments, also Ethernet packet providing device 11 may have a corresponding arrangement. According to an embodiment, Ethernet packet providing device 11 comprises at least one optical interface and/or at least one electrical interface. According to an embodiment, Ethernet packet providing device 11 receives and/or provides Ethernet packets 141, 142 via at least one optical interface and/or at least one electrical interface. According to a further supplementary embodiment, Ethernet packet providing device 11 is incorporated in or comprises a fixed or pluggable optical module housing.

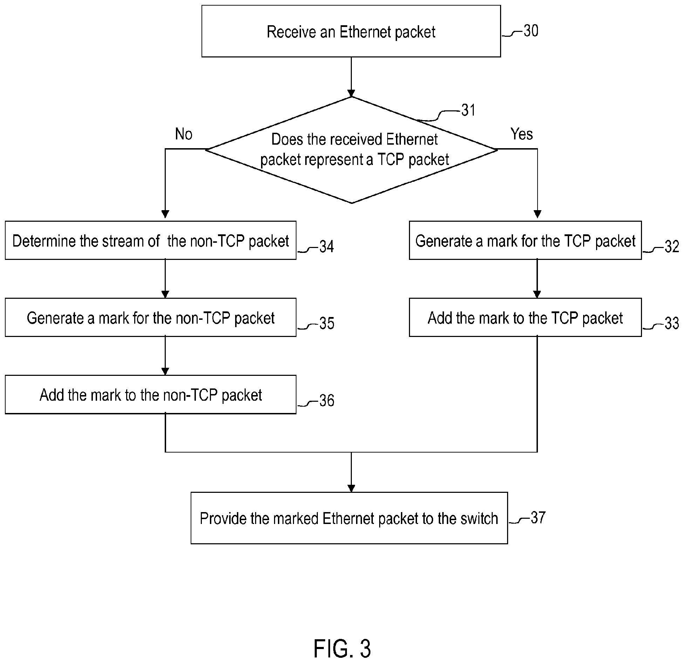

FIG. 3 is a flow diagram with operations executed by Ethernet packet providing device 11 according to an embodiment. According to the present embodiment, Ethernet packet providing device 11 receives at 30 Ethernet packet 141 (transmitted by Ethernet packet providing device 10, in particular by port 101). At 31, Ethernet packet providing device 11 verifies whether received Ethernet packet 141 is a TCP packet or not. If received Ethernet packet 141 is a TCP packet (see in FIG. 3 the "YES"-branch), Ethernet packet providing device 11 generates a corresponding mark for the TCP packet 141 at 32. The mark is generated 32 such that it allows determining a port 131, 132, to which the corresponding Ethernet packet 141, 142, 143, in this case the TCP packet, will be forwarded, and/or such that it marks the port 131, 132, to which the corresponding Ethernet packet 141, 142, 143, in this case the TCP packet, will be forwarded. According to an embodiment, the mark identifies VLAN of the corresponding Ethernet packet 141, 142, 143, in this case VLAN of the corresponding TCP packet.

In the following, the mark generating at 32 will be explained in more detail.

According to an embodiment, the mark is generated as an identification of VLAN of the corresponding Ethernet packet 141, 142, 143. In this case, each of ports 131, 132 is configured to receive Ethernet packets 143 of corresponding VLAN(s) associated with the corresponding port 131, 132. Thus, the decision on port 131, 132 for an Ethernet packet 141, 142, 143 depends on its VLAN. The generated mark, identifying VLAN of the corresponding Ethernet packet 141, 142, 143, marks the corresponding port 131, 132 because each port 131, 132 is associated with at least one corresponding VLAN. Thus each Ethernet packet 141, 142, 143 is transmitted to a corresponding port 131, 132 that is associated with the VLAN of the Ethernet packet 141, 142, 143. For example, port 131 is associated to VLAN A, and port 132 is associated to VLAN B. If VLAN of Ethernet packet 141, 142, 143 is VLAN A, Ethernet packet 141, 142, 143 will be forwarded to port 131 and a corresponding mark, identifying VLAN A and, thus, marking port 131, is generated. If VLAN of Ethernet packet 141, 142, 143 is VLAN B, Ethernet packet 141, 142, 143 will be forwarded to port 132 and a corresponding mark, identifying VLAN B and, thus, marking port 132, is generated.

According to a supplementary embodiment, each mark is generated by using information that concerns the corresponding Ethernet packet 141 and/or that is embodied or comprised in the corresponding Ethernet packet 141. According to an embodiment, each mark is generated as a least significant bit (LSB) of a XOR-sum of at least two of the following: a source address of a network layer of the Ethernet, a destination address of the network layer of the Ethernet, a source address of a transport layer of the Ethernet, a destination address of the transport layer of the Ethernet. The corresponding address information is information of the corresponding Ethernet packet 141, with regard to which a mark is generated at 32. According to an embodiment, the corresponding address information is embodied or comprised in the corresponding Ethernet packet 141.

At 33, the mark, generated for the corresponding Ethernet packet 141, in the present case for the corresponding TCP packet 141, is added to the Ethernet packet 141. Thus, operations at 33 result in a marked Ethernet packet 142, in the present case in a marked TCP packet 142. At 37, marked Ethernet packet 142, in present case marked TCP packet 142, is provided to switch 12.

If received Ethernet packet 141 is not a TCP packet (see in FIG. 3 the "NO"-branch), Ethernet packet providing device 11 turns to 34 and determines the stream of received non-TCP packet 141. Further, Ethernet packet providing device 11 determines whether or not received non-TCP packet 141 is a packet of a stream that is already transmitted, i.e. whether or not other non-TCP packets of the stream of received non-TCP packet 141 have been received by Ethernet packet providing device 11 and provided to switch 12.

In dependence of the result of the determining at 34, generation of a corresponding mark for non-TCP packet 141 is executed at 35.

If the stream of stream of non-TCP packet 141 is already transmitted, i.e. other non-TCP packets of the stream of non-TCP packet 141 have been received by Ethernet packet providing device 11 and provided to switch 12, Ethernet packet providing device 11 (re-) uses with regard to the received non-TCP packet 141 a mark that has been already generated for a previous non-TCP packet of the stream of non-TCP packet 141, i.e. generated for a previously received non-TCP packet of said stream. Thus, Ethernet packet providing device 11 generates for the received non-TCP packet 141 a mark that is equal the mark which has been already generated for the previous non-TCP packet of the stream of non-TCP packet 141, i.e. generated for the previously received non-TCP packet of said stream.

If received non-TCP packet 141 is a first packet of its stream that Ethernet packet providing device 11 receives, a corresponding (new) mark is generated at 35 for non-TCP packet 141. The generation 35 of the mark is executed in the same way as described above with regard to 32, i.e. by use of the same operations wherein the received non-TCP packet 141 replaces the received TCP packet in said operations.

At 36, the mark is added to the Ethernet packet 141 or non-TCP packet 141 respectively. Thus, 36 results in a marked Ethernet packet 142 or a marked non-TCP packet 142 respectively. At 37, marked Ethernet packet 142 or marked non-TCP packet 142 respectively is provided to switch 12.

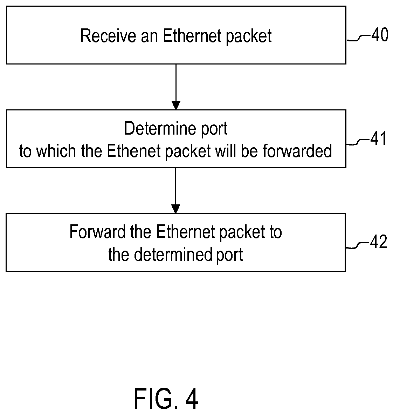

FIG. 4 is a flow diagram with operations executed by switch 12 according to an embodiment.

At 40, switch 12 receives an Ethernet packet 142 transmitted by Ethernet packet transmitting device 10 and provided by Ethernet packet providing device 11. At 41, switch 12 determines port 131, 132 to which the received Ethernet packet 142 will be provided. For this purpose, switch 12 extracts a mark from Ethernet packet 142 incorporated or embodied in Ethernet packet 142. Particularly, said mark has been added 33, 36 to the Ethernet packet 142 by Ethernet packet providing device 11. As described above, the mark allows determining port 131, 132 to which the corresponding Ethernet packet 142 will be forwarded. According to an embodiment, the mark marks port 131, 132, to which the corresponding Ethernet packet 142 will be forwarded.

Generally, according to an embodiment, switch 12 manages a mapping of marks of Ethernet packets 142 to corresponding ports 131, 132, to which Ethernet packets 142 will be forwarded. Based on the mapping, switch 12 identifies for each Ethernet packet 142 the corresponding ports 131, 132, to which the mark of the Ethernet packet 142 maps.

According to an embodiment, the mark identifies VLAN of the corresponding Ethernet packet 142. Switch 12 manages information on mapping of different VLANs to different ports 131, 132. Particularly, according to an embodiment each port 131, 132 is associated with at least one VLAN. According to a further embodiment each VLAN is associated with one or more port 131, 132. Thus, switch 12 determines VLAN that the mark identifies. Further, switch identifies a corresponding mapping of determined VLAN, identified by the mark of the received Ethernet packet 142, to one of ports 131, 132. Subsequently, switch determines port 131, 132, to which the mapping according to the determined VLAN points, as the port to which the received Ethernet packet will be forwarded.

Furthermore, in said port determining at 41, switch 12 verifies whether Ethernet packet 142 is a TCP packet or a non-TCP packet. If Ethernet packet 142 is a non-TCP packet, switch 12 verifies whether or not Ethernet packet 142 is a first packet of Ethernet packet's 142 stream that switch 12 forwards. If Ethernet packet 142 is not a first packet of its stream that is forwarded, i.e. if a previous packet of said stream has already been forwarded by switch 12 to a particular port 131, 132, switch 12 determines the same port 131, 132, to which also the previous packet of Ethernet packet's 142 stream has been forwarded, as the port 131, 132, to which also Ethernet packet 142 will be forwarded.

At 42, switch 12 forwards Ethernet packet 142, 143 to the determined port 131, 132. According to an embodiment, switch 12 removes the mark from the Ethernet packet 142 and forwards 42 Ethernet packet 143 without the mark to the determined port 131, 132. In this case, arrangement of forwarded Ethernet packet 143 corresponds to arrangement of Ethernet packet 141 transmitted by Ethernet packet transmitting device 10. According to another embodiment, switch 12 does not remove the mark and provides Ethernet packet 142, 143 as received to the determined port 131, 132. In this case, arrangement of forwarded Ethernet packet 143 corresponds to arrangement of Ethernet packet 142 provided by Ethernet packet providing device 11.

By executing operations at 41 and 42, switch 12 forwards 42 each of the TCP packets 143 to any one of the at least two ports 131, 132 and forwards 42 each stream of non-TCP packets 143 to one corresponding port 131, 132 of the at least two ports 131, 132. Further, by executing operations at 41 to 42, switch 12 forwards 42 two TCP packets 143 of the same stream of TCP packets to two different ports 131, 132 of the at least two ports 131, 132 and/or forwards 42 non-TCP packets 143 of the same stream of non-TCP packets to the same port 131, 132 of the at least two ports 131, 132. Moreover, by executing operations at 41 to 42, switch 12 is capable to forward 42 TCP packets 143 by alternately distributing the TCP packets 143 among the at least two ports 131, 132 and/or to forward 42 streams of non-TCP packets by alternately distributing the streams of non-TCP packets 143 among the at least two ports 131, 132.

Thus, present application relates to a switch receiving Ethernet packets, comprising TCP packets and/or non-TCP packets, and forwarding the Ethernet packets to at least two ports by forwarding each of the TCP packets to any one of the at least two ports and forwarding each stream of non-TCP packets to one corresponding port of the at least two ports. Further, present application relates to a device receiving Ethernet packets and providing Ethernet packets to the switch, said device generating corresponding mark for each TCP packet such that the corresponding mark allows determining one of the at least two ports, to which the TCP packet will be forwarded; and generating corresponding mark for each non-TCP packet of each corresponding stream of non-TCP packets such that the corresponding mark of each non-TCP packet of the corresponding stream allows determining one of the at least two ports, to which the corresponding stream of non-TCP packets will be forwarded. Although the subject matter(s) of the present application has been shown and described with respect to certain preferred embodiments, equivalents and modifications will occur to others skilled in the art upon the reading and understanding of the specification. The subject matter(s) of the present application is limited only by the scope of the following claims.

## Claims

1. A switch (12) arranged to receive at least three different streams comprising Ethernet packets (141, 142) provided by at least one high data rate port (101), wherein at least one of the three different streams of Ethernet packets (141, 142) comprise transmission control protocol, TCP, packets and at least two streams of the at least three different streams of Ethernet packets (141, 142) comprise non-TCP packets,
and to forward the at least three different streams of Ethernet packets (143) to at least two low data rate ports (131, 132),
**characterized in that** the switch is configured to:
forward the TCP packets of the at least one stream of TCP packets alternately to two different ports of the at least two ports; and
forward non-TCP packets of each single stream of the at least two streams of non-TCP packets to a same port of the at least two ports, and
distribute alternately the at least two streams of non-TCP packets among the at least two ports (131, 132).

2. The switch (12) according to claim 1, wherein the switch (12) is a virtual local area network, VLAN, aware switch.

3. The switch (12) according to any one of the preceding claims, wherein the switch (12) is configured to receive the Ethernet packets (141, 142) from at least one of the following ports (101):
a gigabit media independent interface, GMII, port;
a serial gigabit media independent interface, SGMII, port;
a 1000BASE-X port;
a 2500BASE-X port;
a 2.5GBASE-T port;
a 5GBASE-T port;
a 10GBASE-T port.

4. The switch (12) according to any one of the preceding claims, wherein the switch (12) is configured to receive the Ethernet packets (141, 142) from and/or to forward the Ethernet packets (143) to at least one of the following ports (131, 132):
a reduced gigabit media-independent interface, RGMII, port;
a gigabit Ethernet physical layer, GPHY, port;
1000BASE-T port.

5. The switch (12) according to any one of the preceding claims, wherein:
the switch (12) is configured to receive and/or to forward the Ethernet packets (141, 142, 143) via at least one optical interface and/or via at least one electrical interface; and/or
the switch (12) is incorporated in a fixed or pluggable optical module housing.

6. The switch (12) according to any one of the preceding claims, wherein each of the Ethernet packets (141, 142, 143) comprises a corresponding mark determined based on whether the respective Ethernet packet is a TCP packet or a non-TCP packet.

7. The switch (12) according to claim 6, wherein the mark of each Ethernet packet (141, 142, 143):
allows determining a port (131, 132) of the at least two ports (131, 132), to which the corresponding Ethernet packet (141, 142, 143) will be forwarded;
marks one port (131, 132) of the at least two ports (131, 132), to which the corresponding Ethernet packet (141, 142, 143) will be forwarded; and/or
identifies VLAN of the corresponding Ethernet packet (141, 142, 143).

8. The switch (12) according to claim 6 or 7, wherein the switch (12) is configured to decide, for each Ethernet packet (141, 142, 143), on a port (131, 132) of the at least two ports (131, 132), to which the corresponding Ethernet packet (141, 142, 143) will be forwarded, based on the mark of the corresponding Ethernet packet (141, 142, 143).

9. The switch (12) according to any one of claims 6 to 8, wherein the switch (12) is configured to remove the mark of each Ethernet packet (141, 142, 143) before the forwarding of the corresponding Ethernet packet (143).

10. A method for a switch (12) for receiving at least three different streams comprising Ethernet packets (141, 142) provided by at least one high data rate port (101), wherein at least one of the three different streams of Ethernet packets (141, 142) comprise transmission control protocol, TCP, packets (141, 142) and at least two streams of the at least three different streams of Ethernet packets (141, 142) comprise non-TCP packets (141, 142), and for forwarding the at least three different streams of Ethernet packets (143) to at least two low data rate ports (131, 132), wherein the method is **characterized by**:
forwarding (42) the TCP packets (141, 142) of the at least one stream of TCP packets (141, 142) alternately to two different ports (131, 132) of the at least two ports (131, 132); and
forwarding (42) non-TCP packets (141, 142) of each single stream of the at least two streams of non-TCP packets (141, 142) to the same port (131, 132) of the at least two ports (131, 132), while alternately distributing the at least two streams of non-TCP packets among the at least two ports (131, 132).

11. A computer program product comprising computer readable program code that is configured to cause a computing device to execute the method of claim 10.

12. A computer-readable recording medium configured to store therein a computer program product, which comprises a computer readable program code that is configured to cause a computing device to execute the method of claim 10.

13. A port trunking device (15) arranged to trunk Ethernet traffic, wherein the port trunking device (15) comprises a switch (12) according to any one of claims 1 to 9.

14. The port trunking device (15) according to claim 13, wherein:
the port trunking device (15) is incorporated in a fixed or pluggable optical module housing; and/or
the port trunking device (15) is configured to receive and/or to forward the Ethernet packets (141, 142, 143) via at least one optical interface and/or via at least one electrical interface.

## Patentansprüche

1. Switch (12), eingerichtet zum Empfangen von mindestens drei verschiedenen Streams, die Ethernet-Pakete (141, 142) umfassen, die durch mindestens einen Port (101) mit hoher Datenrate bereitgestellt werden, wobei mindestens einer der drei verschiedenen Streams von Ethernet-Paketen (141, 142) Transmission-Control-Protocol(Übertragungssteuerprotokoll)- bzw. TCP-Pakete umfasst und mindestens zwei Streams der mindestens drei verschiedenen Streams von Ethernet-Paketen (141, 142) Nicht-TCP-Pakete umfassen,
und zum Weiterleiten der mindestens drei verschiedenen Streams von Ethernet-Paketen (143) zu mindestens zwei Ports (131, 132) mit niedriger Datenrate,
**dadurch gekennzeichnet, dass** der Switch ausgelegt ist zum:
Weiterleiten der TCP-Pakete des mindestens einen Streams von TCP-Paketen abwechselnd zu zwei unterschiedlichen Ports der mindestens zwei Ports; und
Weiterleiten von Nicht-TCP-Paketen jedes einzelnen Streams der mindestens zwei Streams von Nicht-TCP-Paketen zu demselben Port der mindestens zwei Ports, und
abwechselndes Verteilen der mindestens zwei Streams von Nicht-TCP-Paketen unter den mindestens zwei Ports (131, 132).

2. Switch (12) nach Anspruch 1, wobei es sich bei dem Switch (12) um einen VLAN(Virtual Local Area Network)-bewussten Switch handelt.

3. Switch (12) nach einem der vorangegangenen Ansprüche, wobei der Switch (12) ausgelegt ist zum Empfangen der Ethernet-Pakete (141, 142) von mindestens einem der folgenden Ports (101):
einem GMII(Gigabit Media Independent Interface)-Port;
einem SGMII(Serial Gigabit Media Independent Interface)-Port;
einem 1000BASE-X-Port;
einem 2500BASE-X-Port;
einem 2.5GBASE-T-Port;
einem 5GBASE-T-Port;
einem 10GBASE-T-Port.

4. Switch (12) nach einem der vorangegangenen Ansprüche, wobei der Switch (12) ausgelegt ist zum Empfangen der Ethernet-Pakete (141, 142) von und/oder zum Weiterleiten der Ethernet-Pakete (143) zu mindestens einem der folgenden Ports (131, 132) :
einem RGMII(Reduced Gigabit Media Independent Interface)-Port;
einem GPHY(Gigabit Ethernet Physical Layer)-Port;
einem 1000BASE-T-Port.

5. Switch (12) nach einem der vorangegangenen Ansprüche, wobei:
der Switch (12) ausgelegt ist zum Empfangen und/oder zum Weiterleiten der Ethernet-Pakete (141, 142, 143) über mindestens eine optische Schnittstelle und/oder über mindestens eine elektrische Schnittstelle; und/oder der Switch (12) in einem festen oder einsteckbaren optischen Modulgehäuse integriert ist.

6. Switch (12) nach einem der vorangegangenen Ansprüche, wobei jedes der Ethernet-Pakete (141, 142, 143) eine entsprechende Markierung umfasst, die basierend darauf bestimmt wird, ob das jeweilige Ethernet-Paket ein TCP-Paket oder ein Nicht-TCP-Paket ist.

7. Switch (12) nach Anspruch 6, wobei die Markierung jedes Ethernet-Pakets (141, 142, 143):
die Bestimmung eines Ports (131, 132) der mindestens zwei Ports (131, 132) ermöglicht, zu dem das entsprechende Ethernet-Paket (141, 142, 143) weitergeleitet wird;
einen Port (131, 132) der mindestens zwei Ports (131, 132) markiert, zu dem das entsprechende Ethernet-Paket (141, 142, 143) weitergeleitet wird; und/oder
VLAN des entsprechenden Ethernet-Pakets (141, 142, 143) identifiziert.

8. Switch (12) nach Anspruch 6 oder 7, wobei der Switch (12) ausgelegt ist zum Entscheiden, für jedes Ethernet-Paket (141, 142, 143), über einen Port (131, 132) der mindestens zwei Ports (131, 132), zu dem das entsprechende Ethernet-Paket (141, 142, 143) weitergeleitet wird, basierend auf der Markierung des entsprechenden Ethernet-Pakets (141, 142, 143).

9. Switch (12) nach einem der Ansprüche 6 bis 8, wobei der Switch (12) ausgelegt ist zum Entfernen der Markierung jedes Ethernet-Pakets (141, 142, 143) vor dem Weiterleiten des entsprechenden Ethernet-Pakets (143).

10. Verfahren für einen Switch (12) zum Empfangen von mindestens drei verschiedenen Streams, die Ethernet-Pakete (141, 142) umfassen, die durch mindestens einen Port (101) mit hoher Datenrate bereitgestellt werden, wobei mindestens einer der drei verschiedenen Streams von Ethernet-Paketen (141, 142) Transmission-Control-Protocol- bzw. TCP-Pakete (141, 142) umfasst und mindestens zwei Streams der mindestens drei verschiedenen Streams von Ethernet-Paketen (141, 142) Nicht-TCP-Pakete (141, 142) umfassen, und zum Weiterleiten der mindestens drei verschiedenen Streams von Ethernet-Paketen (143) zu mindestens zwei Ports (131, 132) mit niedriger Datenrate,
wobei das Verfahren durch Folgendes gekennzeichnet ist:
Weiterleiten (42) der TCP-Pakete (141, 142) des mindestens einen Streams von TCP-Paketen (141, 142) abwechselnd zu zwei unterschiedlichen Ports (131, 132) der mindestens zwei Ports (131, 132); und
Weiterleiten (42) von Nicht-TCP-Paketen (141, 142) jedes einzelnen Streams der mindestens zwei Streams von Nicht-TCP-Paketen (141, 142) zu demselben Port (131, 132) der mindestens zwei Ports (131, 132),
während des abwechselnden Verteilens der mindestens zwei Streams von Nicht-TCP-Paketen unter den mindestens zwei Ports (131, 132).

11. Computerprogrammprodukt, das computerlesbaren Programmcode umfasst, der dazu ausgelegt ist, zu veranlassen, dass eine Rechenvorrichtung das Verfahren nach Anspruch 10 ausführt.

12. Computerlesbares Aufzeichnungsmedium, das dazu ausgelegt ist, darin ein Computerprogrammprodukt zu speichern, das einen computerlesbaren Programmcode umfasst, der dazu ausgelegt ist, zu veranlassen, dass eine Rechenvorrichtung das Verfahren nach Anspruch 10 ausführt.

13. Port-Trunking-Vorrichtung (15), eingerichtet zum Durchführen von Trunking von Ethernet-Verkehr, wobei die Port-Trunking-Vorrichtung (15) einen Switch (12) nach einem der Ansprüche 1 bis 9 umfasst.

14. Port-Trunking-Vorrichtung (15) nach Anspruch 13, wobei:
die Port-Trunking-Vorrichtung (15) in einem festen oder einsteckbaren optischen Modulgehäuse integriert ist; und/oder
die Port-Trunking-Vorrichtung (15) ausgelegt ist zum Empfangen und/oder zum Weiterleiten der Ethernet-Pakete (141, 142, 143) über mindestens eine optische Schnittstelle und/oder über mindestens eine elektrische Schnittstelle.

## Revendications

1. Commutateur (12) conçu pour recevoir au moins trois flux différents comprenant des paquets Ethernet (141, 142) fournis par au moins un port à haut débit de données (101), au moins un des trois flux différents de paquets Ethernet (141, 142) comprenant des paquets sur protocole contrôle de transmission (TCP) et au moins deux flux des au moins trois flux différents de paquets Ethernet (141, 142) comprenant des paquets non TCP, et pour transférer les au moins trois flux différents de paquets Ethernet (143) vers au moins deux ports à bas débit de données (131, 132),
le commutateur étant **caractérisé en ce qu'**il est configuré pour :
transférer les paquets TCP de l'au moins un flux de paquets TCP en alternance vers deux ports différents des au moins deux ports ; et
transférer les paquets non TCP de chaque flux unique des au moins deux flux de paquets non TCP vers un même port des au moins deux ports ; et
distribuer en alternance les au moins deux flux de paquets non TCP parmi les au moins deux ports (131, 132).

2. Commutateur (12) selon la revendication 1, le commutateur (12) étant un commutateur prenant en charge un réseau local virtuel (VLAN).

3. Commutateur (12) selon l'une quelconque des revendications précédentes, le commutateur (12) étant configuré pour recevoir les paquets Ethernet (141, 142) en provenance d'au moins un des ports suivants (101) :
un port sur interface gigabit indépendante du support (GMII) ;
un port sur interface gigabit série indépendante du support (SGMII) ;
un port 1000BASE-X ;
un port 2500BASE-X ;
un port 2,5GBASE-T ;
un port 5GBASE-T ; et
un port 10GBASE-T.

4. Commutateur (12) selon l'une quelconque des revendications précédentes, le commutateur (12) étant configuré pour recevoir les paquets Ethernet (141, 142) en provenance d'au moins un des ports suivants (131, 132) et/ou pour transférer les paquets Ethernet (143) vers au moins un des ports suivants (131, 132) :
un port sur interface gigabit réduite indépendante du support (RGMII) ;
un port sur couche physique Ethernet gigabit (GPHY) ; et
un port 1000BASE-T.

5. Commutateur (12) selon l'une quelconque des revendications précédentes, dans lequel :
le commutateur (12) est configuré pour recevoir et/ou transférer les paquets Ethernet (141, 142, 143) par l'intermédiaire d'au moins une interface optique et/ou par l'intermédiaire d'au moins une interface électrique ; et/ou
le commutateur (12) est incorporé dans un boîtier de module optique fixe ou enfichable.

6. Commutateur (12) selon l'une quelconque des revendications précédentes, dans lequel les paquets Ethernet (141, 142, 143) comprennent une marque correspondante déterminée selon que le paquet Ethernet respectif est un paquet TCP ou un paquet non TCP.

7. Commutateur (12) selon la revendication 6, dans lequel la marque de chaque paquet Ethernet (141, 142, 143) :
permet de déterminer un port (131, 132) des au moins deux ports (131, 132) vers lequel le paquet Ethernet (141, 142, 143) correspondant sera transféré ;
marque un port (131, 132) des au moins deux ports (131, 132) vers lequel le paquet Ethernet (141, 142, 143) correspondant sera transféré ; et/ou
identifie un VLAN du paquet Ethernet (141, 142, 143) correspondant.

8. Commutateur (12) selon la revendication 6 ou 7, le commutateur (12) étant configuré pour décider, pour chaque paquet Ethernet (141, 142, 143), sur un port (131, 132) des au moins deux ports (131, 132), vers lequel le paquet Ethernet (141, 142, 143) correspondant sera transféré sur la base de la marque du paquet Ethernet (141, 142, 143) correspondant.

9. Commutateur (12) selon l'une quelconque des revendications 6 à 8, le commutateur (12) étant configuré pour supprimer la marque de chaque paquet Ethernet (141, 142, 143) avant le transfert du paquet Ethernet (143) correspondant.

10. Procédé pour un commutateur (12) pour recevoir au moins trois flux différents comprenant des paquets Ethernet (141, 142) fournis par au moins un port à haut débit de données (101), au moins un des trois flux différents de paquets Ethernet (141, 142) comprenant des paquets sur protocole contrôle de transmission (TCP) (141, 142) et au moins deux flux des au moins trois flux différents de paquets Ethernet (141, 142) comprenant des paquets non TCP (141, 142), et pour transférer les au moins trois flux différents de paquets Ethernet (143) à au moins deux ports à bas débit de données (131, 132),
le procédé étant **caractérisé par** les étapes consistant à :
transférer (42) les paquets TCP (141, 142) de l'au moins un flux de paquets TCP (141, 142) en alternance vers deux ports différents (131, 132) des au moins deux ports (131, 132) ; et
transférer (42) les paquets non TCP (141, 142) de chaque flux unique des au moins deux flux de paquets non TCP (141, 142) vers le même port (131, 132) des au moins deux ports (131, 132),
tout en distribuant en alternance les au moins deux flux de paquets non TCP parmi les au moins deux ports (131, 132) .

11. Produit de programme informatique, comprenant un code de programme lisible par ordinateur qui est configuré pour amener un dispositif informatique à exécuter le procédé selon la revendication 10.

12. Support d'enregistrement lisible par ordinateur, configuré pour stocker un produit de programme informatique qui comprend un code de programme lisible par ordinateur qui est configuré pour amener un dispositif informatique à exécuter le procédé selon la revendication 10.

13. Dispositif de jonction de ports (15) conçu pour assurer la jonction d'un trafic Ethernet, le dispositif de jonction de ports (15) comprenant un commutateur (12) selon l'une quelconque des revendications 1 à 9.

14. Dispositif de jonction de ports (15) selon la revendication 13, dans lequel :
le dispositif de jonction de ports (15) est incorporé dans un boîtier de module optique fixe ou enfichable ; et/ou
le dispositif de jonction de ports (15) est configuré pour recevoir et/ou transférer les paquets Ethernet (141, 142, 143) par l'intermédiaire d'au moins une interface optique et/ou par l'intermédiaire d'au moins une interface électrique.
